# EUROPEAN PATENT SPECIFICATION

(11) **EP 1 929 740 B1**
(45) Date of publication and mention of the grant of the patent: **24.10.2012**
(21) Application number: 05805699.5
(22) Date of filing: 28.09.2005
(51) Int. Cl.: H04L 29/06

(54) **SYSTEM AND METHOD FOR AUTHENTICATING A USER FOR ACCESSING AN EMAIL ACCOUNT USING AUTHENTICATION TOKEN**
SYSTEM UND VERFAHREN ZUM AUTHENTIFIZIEREN EINES BENUTZERS FÜR DEN ZUGANG ZU EINEM EMAIL-ACCOUNT UNTER VERWENDUNG EINES AUTHENTIFIZIERUNGS-TOKEN
SYSTEME ET PROCEDE PERMETTANT D'AUTHENTIFIER UN UTILISATEUR POUR ACCES A UN COMPTE DE COURRIERS ELECTRONIQUES AU MOYEN D'UN JETON D'AUTHENTIFICATION

(43) Date of publication of application: 11.06.2008
(73) Proprietor: Teamon Systems, Inc., Issaquah, Washington 98027 (US)
(72) Inventor: GORTY, Suryanarayana, Murthy, Redmond, WA 98053 (US)
(74) Representative: Roberts, Gwilym Vaughan
(86) International application number: PCT/US2005/035005
(87) International publication number: WO 2007/055680

(56) References cited:
- WO-A-01/37136
- WO-A-03/058483
- WO-A-2004/063871
- US-A1- 2002 095 571
- US-A1- 2003 061 512
- US-A1- 2005 015 490

## Description

### Field of the Invention

The present invention relates to the field of communications systems, and, more particularly, to electronic mail (email) communications systems and related methods.

### Background of the Invention

Electronic mail (email) has become an integral part of business and personal communications. As such, many users have multiple email accounts for work and home use. Moreover, with the increased availability of mobile cellular and wireless local area network (LAN) devices that can send and receive emails, many users wirelessly access emails from mailboxes stored on different email storage servers (e.g., corporate email storage server, Yahoo, Hotmail, AOL, etc.).

Yet, email distribution and synchronization across multiple mailboxes and over wireless networks can be quite challenging, particularly when this is done on a large scale for numerous users. For example, different email accounts may be configured differently and with non-uniform access criteria. Moreover, as emails are received at the wireless communications devices, copies of the emails may still be present in the! original mailboxes, which can make it difficult for users to keep their email organized.

One particularly advantageous "push" type email distribution and synchronization system is disclosed in U.S. Patent No. 6,779,019 to Mousseau et al., which is assigned to the present Assignee. This system pushes user-selected data items from a host system to a user's mobile wireless communications device upon detecting the occurrence of one or more user-defined event triggers. The user may then move (or file) the data items to a particular folder within a folder hierarchy stored in the mobile wireless communications device, or may execute some other system operation on a data item. Software operating at the device and the host system then synchronizes the folder hierarchy of the device with a folder hierarchy of the host system, and any actions executed on the data items at the device are then automatically replicated on the same data items stored at the host system, thus eliminating the need for the user to manually replicate actions at the host system that have been executed at the mobile wireless communications device.

The foregoing system advantageously provides great convenience to users of wireless email communication devices for organizing and managing their email messages. Yet, further convenience and efficiency features may be desired in email distribution and synchronization systems as email usage continues to grow in popularity. For example, certain email service providers are no longer allowing third-party providers to access accounts using a password and user identifier (ID), for example, an email address, even though the user provides this information to the third-party provider. Instead, these email service providers do not want this information to be stored on third-party systems, and have instead required that such third parties use authentication tokens generated by the email service provider for accessing the user email account. Some third-party systems initially log-on using the user ID and password supplied from the user. The email service provider provides the token, and the system deletes the password and user ID, then stores the authentication token for future use. This is not always advantageous and authentication tokens may not be required for different accounts.

US 2005/015490 discloses a single-sign-on adapter (SSO Adapter) implementing one or more authentication mechanisms that may be used by Portal middleware on behalf of a portal user. A user seeking access to a:resource server through a portal server performs a single sign-on with the portal server at the beginning of a session. When requests a resource from resource server that requires authentication, the authentication is handled by the portal server without requiring an authentication response from the user. The portal server may use stored user credentials, a token-based shared authentication service, or proxy authentication in order to gain access to the resource server on behalf of the portal user.

WO 2004063871 purports to provide users with secure transparent electronic communication, allowing them to send and receive encrypted and/or signed messages with little or no user involvement. In various embodiments, the disclosed system provides a user with e-mail security via automated hierarchical techniques for transparently sending and receiving secure messages, and lowers the burden on administrators. Such a system can also manage cryptographic keys and certificates for the users, and creates such keys and certificates for the users when necessary. A server can intercept unsecured messages from a user, automatically transform those messages into secured messages, and transmit those secure messages to the intended recipient.; The server can also automatically transform messages after the recipient sends a digital identity to the server and downloads the software necessary for transforming the secured messages back into readable messages (i.e., from ciphertext into plaintext). The server can further intercept an unsecured message from a user, search for a digital identity of the intended recipient, secure the unsecured message upon finding such a digital identity, and transparently send the secured message to the intended recipient.

WO 0137136 discloses a system for personalizing interaction between a user communicating over at least one communication channel and a provider of information/products/services, the user having a communication device for communication over the channel with the provider, the system comprising a channel interface for interfacing with the channel, an information/product/service interface for interfacing with an information/product/service provider; ; and a knowledge management system coupled to the channel and information/product/service interface, the knowledge management system comprising a knowledge management repository storing information concerning the user, the information obtained from interaction with the user over the channel including current interactions between the user and the knowledge management system, and further storing information concerning a plurality of information/products/services to offer to the user, and a personalization engine for making a decision as to which of the plurality of information/product/services to present to the user over the communication channel based on the stored information in the knowledge management repository.

US 2003061512 discloses a ASP aggregator service is presented. An aggregator token is generated by an ASP aggregator service and sent to a client device after its user has been successfully authenticated during a single-sign-on operation that is provided by the ASP aggregator service. The aggregator token then accompanies any request from the client to aggregated applications within the ASP aggregator service's infrastructure. The aggregator token comprises an indication of an address or resource identifier within the ASP aggregator service to which a client/user can be redirected when the client/user needs to be authenticated by the ASP aggregator service. In other words, the address/identifier is associated with a logon resource; when a request from a client is sent to this address, the ASP aggregator service responds with an authentication challenge to force the user to complete a single-sign-on operation.

The invention is defined in the independent claims. Some optional features of the invention are defined in the dependent claims.

### Brief Description of the Drawings

Other objects, features and advantages of the present invention will become apparent from the detailed description of the invention which follows, when considered in light of the accompanying drawings in which:

FIG. 1 is schematic block diagram of a direct access electronic mail (email) distribution and synchronization system.

FIG. 2 is a schematic block diagram of an exemplary embodiment of user interface components of the direct access proxy of the system of FIG. 1.

FIG. 3 is a schematic block diagram of an exemplary embodiment of the Web client engine of the system of FIG. 1.

FIGS. 4 is a schematic block diagram of an exemplary embodiment of the mobile office platform engine machine for use in the system of FIG. 1.

FIG. 5 is a schematic block diagram of an exemplary embodiment of the database module of the system of FIG. 1.

FIG. 6 is a high-level flowchart showing an example of a method that can be used for authenticating a user to obtain electronic mail (email) using authentication tokens.

FIG. 7 is a schematic block diagram illustrating an exemplary mobile wireless communications device that can be used with the Direct Access system shown in FIG. 1.

### Detailed Description of the Preferred Embodiment

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout, and prime notation is used to indicate similar elements in alternative embodiments.

A system authenticates a user for accessing an electronic mailbox of the user from a remote device and obtains electronic mail (email). The email server is provided by an email service provider that includes the electronic mailbox of the user. A mobile office platform is operative for accessing the email server provided by the email service provider. A determination is made if an authentication token is required to access the electronic mailbox of a user. The authentication token is received from the email server if an authentication-token is required. Access to the electronic mailbox of the user is attempted using the authentication token. The authentication token is stored for subsequent use by the user to access their electronic mailbox if access to the electronic mailbox using the authentication token has been successful.

In another aspect, a mobile wireless communications device receives user email from the mobile office platform. A database is operative with the mobile office platform and stores the authentication token for subsequent use when the user attempts access through the mobile office platform, which can include an email server and a direct access proxy for accessing and retrieving user emails from the electronic mailbox of the user. The mobile office platform includes a database for storing the authentication token for subsequent use when the user attempts access to the electronic mailbox of the user through the mobile office platform.

The mobile office platform is also operative for initially accessing the electronic mailbox for the user identification and email address. The mobile office platform is also operative for discarding the user identification and email address if the authentication token can access the electronic mailbox of the user. The mobile office platform can also be operative for retaining the user identification and email address if an authentication token is not required for accessing the electronic mailbox of the user.

A method and computer-readable medium having computer-executable instructions with the described functions is also set forth.

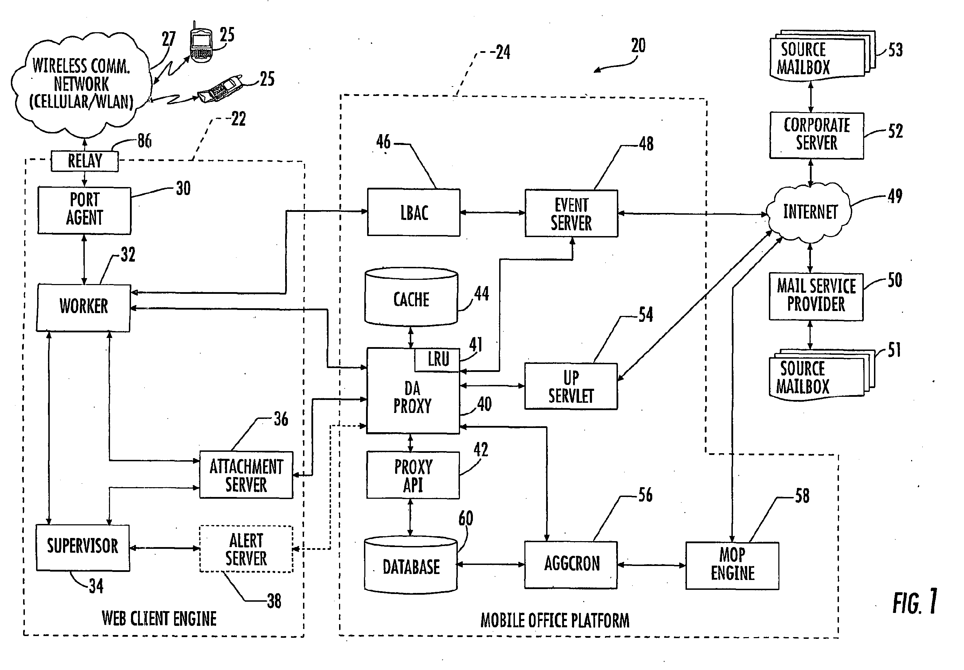

Referring initially to FIG. 1, a direct access (DA) email distribution and synchronization system 20 allows direct access to different mail sources, allowing messages to be transferred directly to a mobile wireless handheld device from a source mailbox. As a result, different mail stores need not be used for integrated external source mail accounts, and a permanent copy of an email in a local email store is not required.

Although this diagram depicts objects as functionally separate, such depiction is merely for illustrative purposes. It will be apparent to those skilled in the art that the objects portrayed in this figure can be arbitrarily combined or divided into separate software, firmware or hardware components. Furthermore, it will also be apparent to those skilled in the art that such objects, regardless of how they are combined or divided, can execute on the same computing device or can be arbitrarily distributed among different computing devices connected by one or more networks.

The direct access system **20** enables email users or subscribers to have email from third-party email services pushed to various mobile wireless communications devices **25.** Users need not create a handheld email account to gain direct access to an existing external emails account. The direct access system **20** may operate without performing aggregation as used in some prior art systems, in which emails are aggregated from multiple different source mailboxes to a single target mailbox. In other words, email need not be stored in an intermediate target mailbox, but instead may advantageously be accessed directly from a source mail store.

As illustrated in FIG. 1, the direct access system **20** illustratively includes a Web client (WC) engine **22** and a mobile office platform (MOP) **24.** These Web client engine **22** and mobile office platform **24** operate together to provide users with direct access to their email from mobile wireless communications devices **25** via one or more wireless communications networks **27,** for example. Both the Web client engine **22** and the mobile office platform **24** may be located at the same location or at separate locations, and implemented in one or more servers. The web client engine **22** illustratively includes a port agent **30** for communicating with the wireless communications devices **25** via the wireless communications network(s) **27,** a worker **32,** a supervisor **34,** and an attachment server **36,** which will be discussed further below. An alert server **38** is shown in dashed lines, and in one preferred embodiment, is not used, but could be part of the system in yet other embodiments.

The mobile office platform **24** illustratively includes a DA proxy **40,** and a proxy application programming interface (API) **42** and a cache **44** cooperating with the DA proxy. The mobile office platform **24** also illustratively includes a load balance and cache (LBAC) module **46,** an event server **48,** a universal proxy (UP) Servlet **54,** an AggCron module **56,** a mobile office platform (MOP) engine **58,** and a database (DB) engine **60,** which will be discussed in further detail below. The Least Recently Used (LRU) cache **41** caches new messages, and can release messages and objects that were least recently used.

The supervisor **34** processes new mail notifications that it receives from the direct access proxy **40.** It then assigns a job, in the form of a User Datagram Protocol (UDP) packet, to the least-loaded worker **32**, according to the most recent UDP heartbeat the supervisor **34** has received. For purposes of this description, heartbeat is a tool that monitors the state of the server. Additionally, the supervisor **34** will receive a new service book request from the direct access proxy **40** to send service books to the mobile wireless communication device for new or changed accounts. A service book can be a class that could contain all service records currently defined. This class can be used to maintain a collection of information about the device, such as connection information or services, such as an email address of the account.

The worker **32** is an intermediary processing agent between the supervisor **34** and the port agent 30, and responsible for most processing in the Web client engine **22.** It will retrieve e-mail from a universal proxy **54,** via a direct access proxy, and format e-mail in Compressed Multipurpose Internet Mail Extension (CMIME) as a type of Multipurpose Internet Mail Extension, and send it to the port agent **30,** for further processing. Its responsibilities include the following tasks: (1) messages sent to and received from the handheld; (2) message reply, forward and more requests; (3) Over The Air Folder Management operation (OTAFM); (4) attachment, viewing; and (5) service book.

The port agent **30** acts as a transport layer between the infrastructure and the rest of the Web client engine **22**. It is responsible for delivering packets to and from the mobile wireless communications device. To support different integrated mailboxes with one device, more than one service book can be used, and each service book can be associated with one integrated mailbox. A port agent **30** can include one Server Relay Protocol (SRP) connection to a relay, but it can also handle multiple SRP connections, and each connection may have a unique Globally Unique Identifier (GUID) associated with a service book. The attachment server 36 provides service for document/attachment conversion requests from workers **32.**

The direct access proxy **40** provides a Web-based Distributed Authoring and Versioning (WebDAV) interface that is used by the worker **32** to access account and mailbox information. This provides functionality to create, change and move documents on a remote server, e.g., a Web server. The direct access proxy **40** typically will present an asynchronous interface to its clients. The LBAC module **46** is used by a notification server and the Web client engine **22** components to locate the proper DA proxy for the handling of a request. The universal proxy Servlet **54** abstracts access to disparate mail stores into a common protocol. The event server **48** responds to notifications of new messages from corporate servers **52** and/or mail service providers **50,** which may be received via the Internet **40,** for example. The notifications are communicated to the direct access proxy **40** by the AggCron module **56** and the event server **48** so that it may initiate checking for new mail on source mailboxes **51, 53** of the mail service providers **50** and/or corporate servers **52.** The proxy API can be a Simple Object Access Protocol (SOAP) Daemon **42** and is the primary interface into a database **60,** which is the primary data store for the mobile office platform **24.** The AggCron module **56** may also periodically initiate polling for new messages as well.

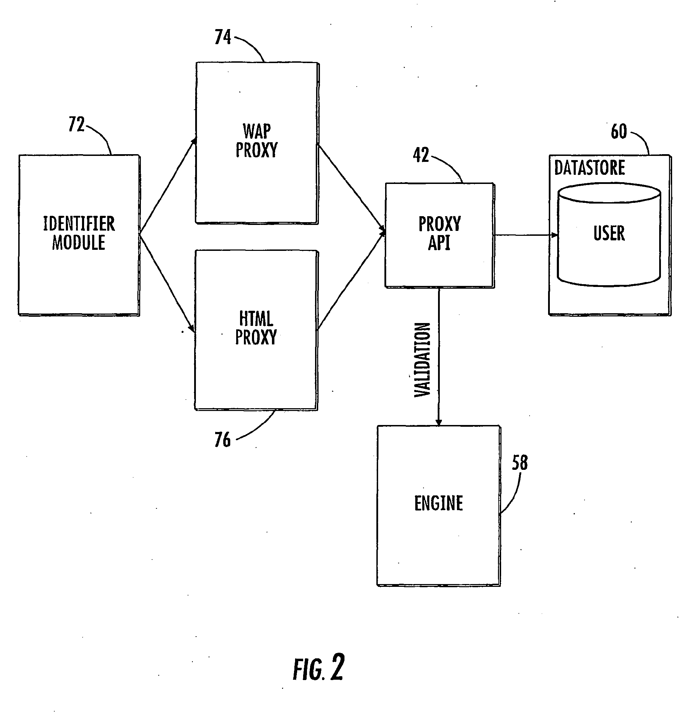

FIG. 2 is a high-level block diagram showing user interface components of the direct access proxy **40.** More particularly, the direct access proxy **40** illustratively includes an identifier module **72** with various downstream proxy modules for different communication formats, such as a Wireless Application Protocol (WAP) proxy module **74** and a Hypertext Markup Language (HTML) proxy module **76.** Of course, it will be appreciated by those skilled in the art that other types of proxy modules for other communications formats may also be used.

The identifier module **72** provides a centralized authentication service for the direct access system **20** and other services. An authentication handshake may be provided between an ID service and direct access system **20** to ensure that users have the proper credentials before they are allowed access to the direct access system 20. The ability to switch from managing a Web client to a direct access system, or vice versa, may occur without requiring the user to reenter any login credentials. Any Web client and direct access may share session management information on behalf of a user.

The WAP proxy **74** provides a wireless markup language (WML)-based user interface for configuring source mailboxes with the mobile office platform **24.** The HTML proxy **76** provides an HTML-based user interface for configuring of source mailboxes in the MOP **24.** The proxy API **42** (SOAP Daemon) is the primary interface into the database **60.** The engine **58** is a protocol translator that connects to a source mailbox to validate configuration parameters. The database **60** is the primary user data store for the mobile office platform **24.**

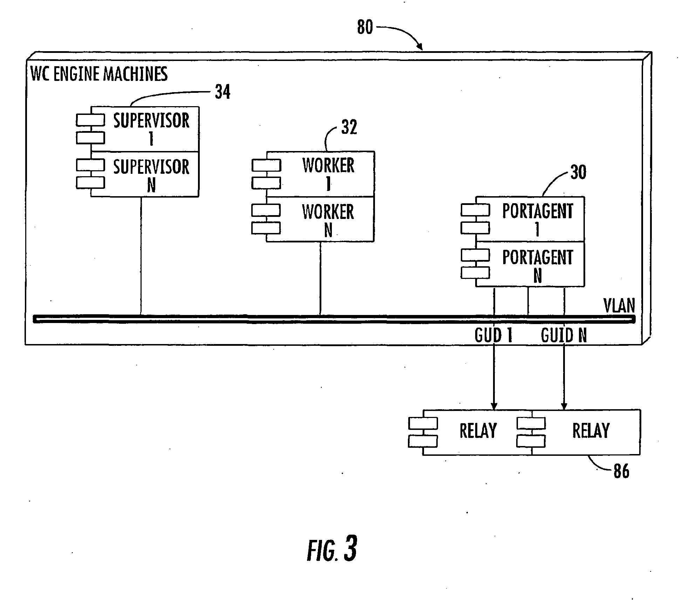

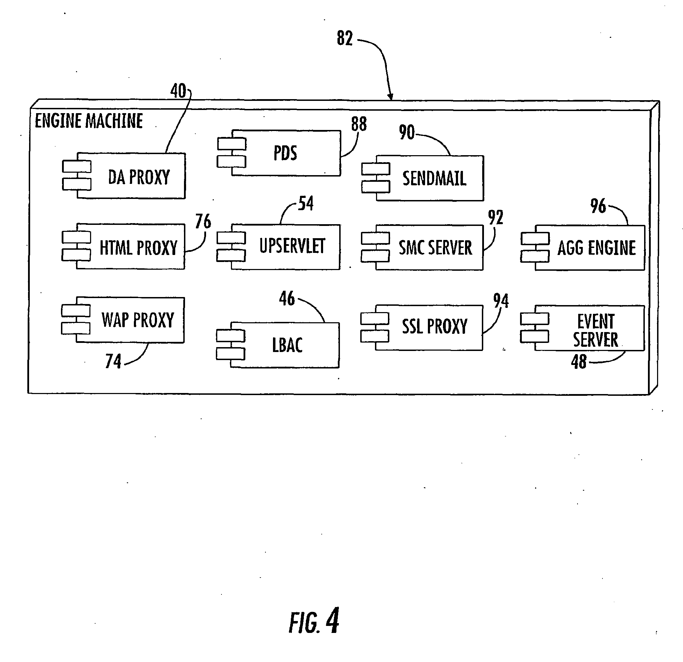

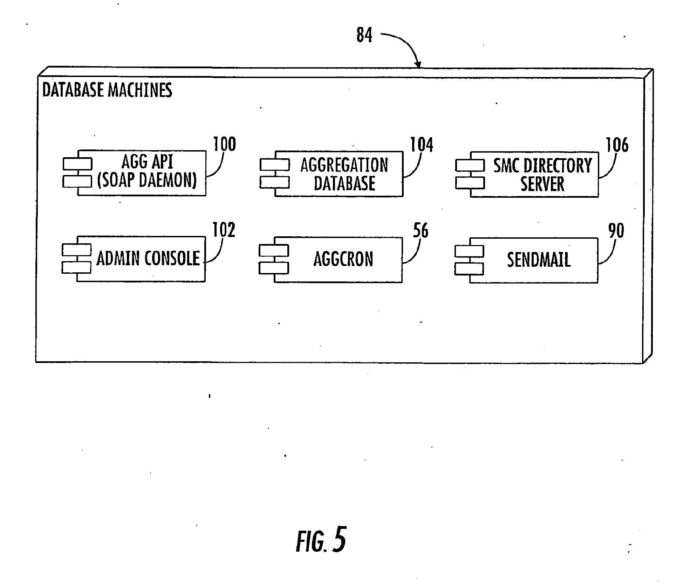

FIGS. 3, 4 and 5 illustrate respective Web client engine machines **80** (FIG. 3), an engine machine **82** (FIG. 4), and database machine **84** (FIG. 5). The Web client engine machine **80** illustratively includes the supervisors **34,** workers **36,** and port agents **38.** Relays **86** cooperate with the port agents **38** using a GUID.

The engine machine **82** illustratively includes a direct access proxy **40,** HTML proxy **76,** WAP proxy **74,** PDS module **88,** UP Servlet **54,** LBAC module **46,** a sendmail module **90,** an secure mail client (SMC) server **92,** a secure sockets layer (SSL) proxy **94**, an aggregation engine **96**, and event server **48.** The SMC server **92** cooperates with corresponding SMC modules resident on certain corporate networks, for example, to convey email data between the mobile office platform **24** and source mailboxes. The database machine **84** may include an aggregation application programming interface (API) **100** as a SOAP Daemon, an administration console **102**, an aggregation database **104,** the AggCron module **56,** an SMC directory server **106,** and a send mail module **90.**

The various components of the Web client engine **22** may be configured to run on different machines or servers. The component binaries and configuration files may either be placed in a directory on the network or placed on a local disk that can be accessed to allow the appropriate components to run from each machine. In accordance with one exemplary implementation, deployment may include one supervisor, two workers, and one port agent for supporting 30,000 external source mailboxes, although other configurations may also be used. Actual production deployment may depend on the results of load, performance and stress testing, as will be appreciated by those skilled in the art.

For the mobile office platform **24** direct access components, modules and various functions, machines are typically installed in two configurations, namely engine machines (FIG. 4) and database machines (FIG. 5). While these machines may have all of the above-described components installed on them, not all of these components need be active in all applications (e.g., aggregation may be used with systems that do not support push technology, etc.). Once again, actual production deployment may depend on the results of load, performance and stress testing.

The mobile office platform **24** architecture in one known technique advantageously uses a set of device/language-specific extensible Stylesheet Language (XSL) files, which transform application data into presentation information. In one non-limiting example, a build process takes a non-localized XSL and generates a localized XSL for each supported language. When the XSL is used, it is "compiled" in memory and cached for repeated use. The purpose of pre-localizing and caching the templates is to reduce the CPU cycles required to generate a presentation page.

Branding may also be performed. Initially, a localized XSL may build a WAP application to access aggregated email accounts. A WAP proxy application may be localizable and support multiple WAP devices. For each logical page of an application, a device-specific XSL may be created, which may be localized for each language/country supported. This rendering scheme may support not only WAP devices, but also SMTP, HTML and POP proxies, for example. In branding, each page of a given application may be customized for each different brand.

The branding of a page may be accomplished through XSL imports, including the use of a Java application programming interface (API) for XML processing (JAXP) feature to resolve the imports dynamically. This need not require that each combined page/brand template be compiled and cached. By way of example, in a sample template directory, first and second pages for a single language/country may be combined with branded counterparts to generate a plurality of distinct template combinations. It is also possible to profile memory requirements of an application by loading templates for a single language, device/application and brand. An HTML device may include a set of templates that are large compared to other devices.

In one known technique, the mobile office platform **24** advantageously builds processes and takes non-localized files and language-specific property files and combines them to make each non-localized XSL into an XSL for each supported language. A separate XSL for each language need not be used, and the language factor may be removed from the memory usage equation. A JAXP API may be used to extend XSL with Java classes. The extensions may take various forms, for example, including extension elements and extension functions. A template may be transformed by creating and initializing an extension object with a locale and passing an object to a transformer. The system can remove multiple imports and use less memory. HTML templates can use template importing to enable template reuse, much like Java classes, and reuse other Java classes through a mechanism like derivation or importing.

In the direct access system **20,** users receive email on their mobile wireless communications devices **25** from multiple external accounts, and when replying to a received message, the reply-to and sent-from address integrity is preserved. For example, for a user that has an integrated Yahoo! account (user@yahoo.com) and a POP3 account (user@pop3.com), if they receive an email at user@yahoo.com, their replies generated from the device **25** will appear to come from user@yahoo.com. Similarly, if a user receives an email at user@pop3.com, their replies will appear to come from user@pop3.com.

Selection of the "sent from" address is also available to a user that composes new messages. The user will have the ability to select the "sent from" address when composing a new message. Depending on the source mailbox type and protocol, the message may also be sent through the source mail service. This functionality can be supported by sending a configuration for each source mailbox, for example, as a non-limiting example, a service book for each source mailbox **51, 53** to the mobile wireless communications device **25.**

As noted above, a service book is a class that may include all service records currently defined. This class may be used to maintain a collection of information about the device, such as connection information. The service book may be used to manage HTTP connections and mail (CHIME) information such as account and hierachy. At mobile wireless communications devices **25,** a delete service book request may be sent when a source mailbox **51, 53** is removed from the account. The service book may also be resent to the device **25** with a viewable name that gives the user some indication that the selection is no longer valid.

A sent items folder may also be "synchronized." Any device-originated sent messages may be propagated to a source account and stored in a sent mail folder, for example. Also, messages deleted on the device **25** may correspondingly be deleted from the source mailbox **51, 53.** Another example is that device-originated marking of a message as read or unread on the device **25** may similarly be propagated to the source mailbox **51, 53.** While the foregoing features are described as source-dependent and synchronizing one-way, in some embodiments certain synchronization features may in addition, or instead, propagate from the source mailbox/account to the handheld device, as will be appreciated by those skilled in the art.

When available, the mail service provider or corporate mail server may be used for submission of outgoing messages. While this may not be possible for all mail service providers or servers, it is preferrably used when available as it may provide several advantages. For example, subscribers to AOL will get the benefit of AOL-specific features like parental controls. Furthermore, AOL and Yahoo users, as non-limiting examples, will see messages in their sent items folder, and messages routed in this manner may be more compliant with new spam policies such as Sender Policy Framework (SPF) and Sender Id. In addition, messages sent via corporate mail servers **52** will have proper name resolution both at the global address list level and the personal level. It should be understood, however, that the use of the mail service provider **50** to deliver mail may be dependant on partner agreements and/or protocol, depending upon the given implementation.

The architecture described above also advantageously allows for features such as on-demand retrieval of message bodies and attachments and multiple folder support. Morever, a "this-is-spam" button or indicator may be used allowing company labels and other service provider-specific features when supported by an underlying protocol, as will be appreciated by those skilled in the art.

One particular advantage of the direct access system **20** is that a user need not configure an account before integrating additional accounts. However, a standalone email address may be used, and this address advantageously need not be tied to a mailbox size which the subscriber is required to manage. For example, the email account may be managed by an administrator, and any mail could be purged from the system after a predetermined period of time (i.e., time-based auto-aging with no mailbox limit for all users).

Additionally, all aspects of any integrated email account creation, settings and options may advantageously be available to the user from their mobile wireless communications device **25** Thus, users need not visit an HTML site and change a setting, create a filter, or perform similar functions, for example. Of course, an HTML site may optionally be used.

As a system Internet email service with the direct access system **20** grows, ongoing emphasis may advantageously be placed on the administrative site to provide additional information to carrier administrators, support teams, and similar functions. However, in some instances a mail connector may be installed on a personal computer, and this functionality may not always be available from the mobile wireless communications device.

The Web client engine **22** may advantageously support different features including message to handheld (MTH), message from handheld (MFH), forward/reply a message, request to view more for a large message (e.g., larger than 2K), request viewing message attachment, and over the air folder management (OTAFM). These functions are explained below.

For an MTH function, each email account integrated for a user is linked with the user device through a Web client service book. For each new message that arrives in the Web client user mailbox, a notification that contains the new message information will typically be sent to a Web client engine supervisor component (FIG. 3), which in turn will assign the job to an available worker with the least load in the system. The chosen worker 32 will validate the user information and retrieve the new message from the user source mailbox and deliver it to the user device.

In an MFH function, MFH messages associated with a Web client service book are processed by the Web client engine **22** and delivered to the Internet **49** by the worker **32** via the simple mail transfer protocol (SMTP) or native outbox. If a user turns on the option to save the sent message to the sent items folder, the direct access proxy will save a copy of the sent message to this folder.

In a Forward/Reply/More function, the user can forward or reply an MTH or MFH message from the mobile wireless communications device **25** as long as the original message still existed in the direct access proxy cache or in user mailbox. For MTH, the worker **32** may send the first 2K, for example, or the whole message (whatever is less) to the user device. If the message is larger than 2K, the user can request MORE to view the next 2K of the message. In this case, the worker **32** will process the More request by retrieving the original message from the user source mailbox, and send back the 2K that the device requests. Of course, in some embodiments more than 2K of message text (or the entire message) may be sent.

In an attachment-viewing function, a user can view a message attachment of a popular document format (e.g., MS Word, MS Power Point, MS Excel, Word Perfect, PDF, text, etc.) or image format (GIF, JPEG, etc). Upon receiving the attachment-viewing request, which is implemented in a form of the More request in this example, the worker **32** can fetch the original message from the user source mailbox via the direct access proxy, extract the requested attachment, process it and send result back to the user device. The processing requires that the original message has not been deleted from the user Web client mailbox.

In the save sent message to sent items folder function, if the user turns this option on, the worker **32** places a copy of each MFH message sent from the user device in the user sent items folder in the mailbox. In over the air folder management, the Web client OTAFM service maintains any messages and folders in the user mailbox synchronized with the user device over the air.

Whenever a message in the user source mailbox is Moved/Deleted, the associated message on the device may also be Moved/Deleted accordingly, and vice-versa. When a message is Moved/Deleted on the device, the associated message in the user Web client mailbox may also be Moved/Deleted accordingly. Similarly, when a folder is Added/Removed/Renamed from the user Web client mailbox, the associated folder on the device may be Added/Removed/Renamed, and vice-versa.

The system **20** may advantageously support different subsets of various messaging features. For example, in the message to handheld function, the mobile office platform **24** may be responsible for connecting to the various source mailboxes **51, 53** to detect new emails. For each new mail, a notification is sent to the Web client engine **22** and, based on this notification, the supervisor **34** chooses one of the workers **32** to process that email. The chosen worker will fetch additional account information and the contents of the mail message from the direct access proxy **40** and deliver it to the user device **25.**

In a message sent from handheld function, the MFH could be given to the direct access proxy **40** from the Web client worker **32.** In turn, the mobile office platform **24** delivers a message to the Internet **49** by sending through a native outbox or sending it via SMTP. It should be understood, however, that the native outbox, whenever possible, may provide a better user experience, especially when taking into account current anti-spam initiatives such as SPF and sender Id.

In a message deleted from handheld function, when a message is deleted from the device **25,** the Web client engine **22** notifies the mobile office platform **24** via the direct access proxy **40.** As such, the mobile office platform **24** can delete the same message on the source mailbox.

When handling More/Forward/Reply/Attachment viewing requests, the Web client worker **32** may request an original mail from the direct access proxy **40.** It will then process the request and send the results to the mobile wireless communications device **25.** The architecture may additionally support on-demand retrieval of message parts and other upgrades, for example.

Upon the integration of a new source mailbox **51, 53,** the service book notification from the alert server **38** may be sent to the supervisor **34,** which assigns this notification to a worker **32** for sending out a service record to the device. Each source mailbox **51, 53** may be associated with a unique service record. In this way, each MFH message is linked with a source mailbox **51, 53** based on the service record on the device.

The system **210** may also poll the integrated external mailboxes periodically to check for new mail and to access any messages. The system **20** may further incorporate optimizations for polling bandwidth from an aggregation component allowing a quick poll. The system 20 can also advantageously support a large active user base and incorporate a rapidly growing user base.

The topology of load balancing can be based on the size of a component's queue and its throughput. These load statistics can be monitored by a mechanism in one example called the UDP Heartbeat, as described before. If a component is overloaded or has a large queue size, the component will have less chance to get an assigned job from other components. In contrast, a component will get more assigned jobs if it completes more jobs in the last few hours than other components. With this mechanism, the load could distribute over heterogeneous machine hardware, i.e., components running on less power machines will be assigned fewer jobs than those on machines with more power hardware.

General load balancing for any mobile office platform components can be accomplished through the use of a load balancer module, for example, a BIG-IP module produced by F5 Networks of Seattle, Washington. BIG-IP can provide load balancing and intelligent layer 7 switching, and can handle traffic routing from the Internet to any customer interfacing components such as the WAP and HTML proxies. The use of a BIG-IP or similar module may provide the application with pooling capabilities, fault tolerance and session management, as will be appreciated by those skilled in the art.

Typically, access to a single source mailbox **51, 53** can be from a single direct access proxy **40** over a persistent connection. Any requests on behalf of a particular user could persist to the same machine in the same direct access clustered partition. As certain components are system-wide and will be handling work for users across many partitions, these components can be designed to determine which direct access partition to communicate with on a request-by-request basis.

The load balancer and cache (LBAC) **46** may support this function. The LBAC **46** is a system-wide component that can perform two important functions. The first of these function is that it provides a mapping from the device PIN to a particular direct access proxy **40,** while caching the information in memory for both fast access and to save load on the central database. Secondly, as the direct access proxy **40** will be run in clustered partitions, the LBAC **46** may distribute the load across all direct access proxies within any partition.

The LBAC **46** can be formed of different components. For example, the code which performs the load balancing can be an extended version of a secure mail connector. The code can also perform lookups to the central database and cache the results (LBAC).

In one non-limiting example, when a worker requires that a direct access proxy **40** perform work, it provides the LBAC **46** with a device PIN. The LBAC **46** will discover which partition that PIN is associated with by looking in its cache, or retrieving the partition identifier from a central database (and caching the result). Once the partition is known, the LBAC **46** then consults its cache to see which direct access proxy in that partition has been designated to handle requests for that PIN. If no mapping exists, the LBAC requests the PDS to create a new association on the least loaded DA proxy **40** (again caching the result). Finally, the LBAC **46** responds to the worker **32** with the connection information for the proper direct access proxy to handle that particular request.

The secure mail connector **88** may run in failover pairs, where one is an active master and the other is a secondary standby. Internal data structures may be replicated in real-time from the master to the standby. Multiple LBACs **46** can be run for scalability and fault tolerance, but typically would require an external connection balancing component, such as the BIG-IP component as explained before.

A receiving component in the Web client engine **22** saves the job that has been assigned to it from other components to a job store on the disk before processing. It can update the status of the job and remove the job from the job store when the job processing is completed. In case of component failure or if the process is restarted, it can recover the jobs from the job store and, based on the current statuses of these jobs, continue processing these jobs to the next state, saving the time to reprocess them from the beginning.

Any recovery from the standpoint of MTH/MFH can be achieved through current polling behavior and on the Web client engine **22** recovery mechanisms. From within the mail office platform components, until a message has been successfully delivered to a Web client engine **22,** that message is not recorded in the partition database **60.** During the next polling interval, the system can again "discover" the message and attempt to notify the Web client engine **22.** For new mail events, if an event is lost, the system can pick up that message upon receiving the next event or during the next polling interval. For sources supporting notifications, this interval could be set at six hours, as one non-limiting example. For messages sent from the Web client engine **22,** and for messages that have been accepted by the Web client engine, recovery can be handled by different Web client engine components.

The Web client engine **22** may advantageously be horizontally and vertically scalable. Multiple supervisors **34** can be registered/configured with direct access proxies **40** to provide the distribution of the notification load and the availability of engine service. Multiple workers **32** and port agents **30** can run on the same machine or across multiple machines to distribute load and achieve redundancy. As the number of users grows, new components can be added to the system to achieve high horizontal scalability.

It is possible for a new component to be added to or removed from the system automatically without down time. Traffic can automatically be delegated to a new component and diverted away from failed components. Each component within the mobile office platform **24** can be deployed multiple times to achieve horizontal scalability. To achieve vertical scalability, each mobile office platform **24** component can be a multi-threaded process with a configurable number of threads to scale under heavy load. Pools of connections can be used to reduce the overhead of maintaining too many open connections.

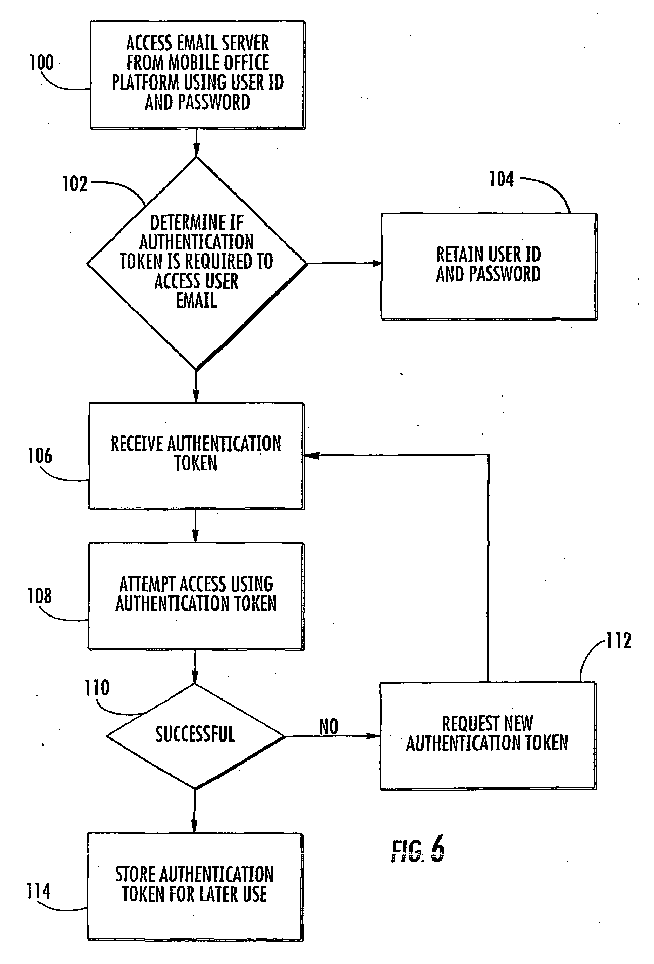

FIG. 6 is a high-level flowchart showing an example of a method that can be used for authenticating a user to obtain electronic mail (email) using an authentication token. A system can be used with the method shown in FIG. 1 and include functional components in addition to those shown in FIG. 1. Such components of the mobile office platform **24** can be operative as an email server and the cache **44,** DA proxy **40,** proxy API, database **60** and event server **48,** as well as other components, can be used for the method.

In this system, email can be provided by email service providers and the mobile office platform accesses mail on behalf of the user from these email service providers. The mobile office platform authenticates a user with a typical email server or other third-party server using the user's user identification, for example, the log-in ID, or email address and password. If an authentication token is required to access the user's email, the mobile office platform receives the authentication token from the server upon authentication. The mobile office platform attempts to access the user's email from the email server using this authentication token. If this is successful, and if it is possible for the mobile office platform to always access the user's email using the authentication token, the mobile office platform would delete the user identification and password from the database and store the authentication token. It is also possible for the system to never store a user identification and password in the database. For example, upon receiving the configuration data from a user, the steps above can be attempted and the authentication token directly stored, discarding the user identification and password. From this point, access to the email server is done using the authentication token for actions such as downloading email and marking messages as read.

As shown in the flowchart of FIG. 6, the mobile office platform accesses the email server provided by the email service provider, for example, by using a user identification (ID) such as an email address or log-in ID and password (block 100). A determination is made if an authentication token is required to access the electronic mailbox of the user (block 102). If not, then the user ID and password can be retained (block 104). If the authentication token is required, then the mobile office platform receives an authentication token from the email server (block 106), which in some instances could be separate from the email service provider. An attempt is made to access the user electronic mailbox using the authentication token (block 108). A determination is made of success (block 110), and if not, then a new authentication token is required (block 112). An attempt is made again using the new authentication token. If the attempt was successful, the authentication token is stored for later use by the user when accessing their electronic mailbox (block 114).

The mobile office platform **24** supports an email server function and includes the Direct Access proxy **40** for accessing and retrieving user emails from the electronic mailbox of the user. The database **60** shown at the mobile office platform **24** can store the authentication token for subsequent use, or a different database can be operative with the various illustrated components, modules and functions shown in FIGS. 1-5 for storing authentication tokens. The database could be on a different platform from the mobile office platform **24.**

The mobile office platform components are operative for initially accessing the electronic mailbox with a user identification and password. The mobile office platform can discard the user identification and password if the authentication token can access the electronic mailbox of the user. The mobile office platform can also be operative for retaining the user identification and password if an authentication token is not required for accessing the electronic mailbox of the user. The computer-readable medium having computer-executable instructions for executing the above-described functions can be included on the various servers or other components as described above.

The authentication token can operate by challenge/response or be a time-based code sequence, and in some instances, a separate password provided by the email service provider to authenticate a user. It is also possible to be a piece of information or code similar to a cookie to contain information, such as log-in or registration information, to access the electronic mailbox'of a user. Other types of tokens can be used as suggested by those skilled in the art.

In a challenge/response technique, the email server could create a "challenge" that is typically a random number sent to the third-party server. The mobile office platform could use its password or secret key to encrypt the challenge via an encryption algorithm or a one-way hash function and send the result back to the network as a response. An authentication system could perform the same cryptographic process on the challenge and compare its result to the response from the client. If there is a match, the authentication system can verify that the user has the correct password. Different types of authentication tokens can be used. The authentication system could reside on a different server than the email server.

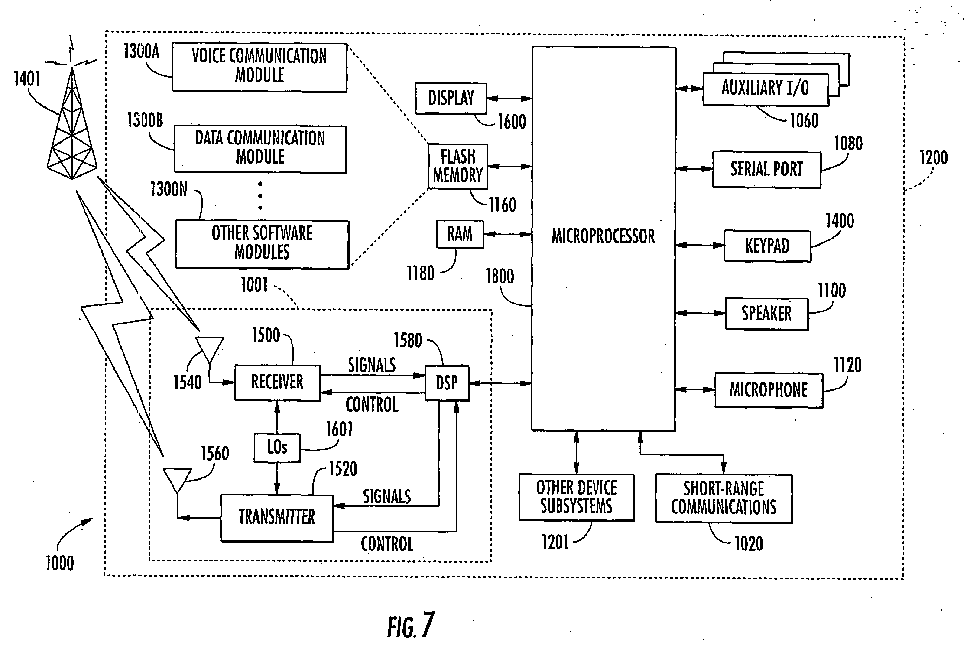

An example of a handheld mobile wireless communications device **1000** that may be used is further described in the example below with reference to FIG. 7. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture.' The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device 1000.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device 1000 may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A system (20) for authenticating a user for accessing an electronic mailbox (51, 53) of the user from a remote device and obtaining electronic mail (email), which comprises:
an email server (50, 52) provided by an email service provider; and
a mobile office platform (24) operative for,
initially accessing the email server by using a user identification and password to authenticate the user,
accessing the email server provided by the email service provider,
determining if an authentication token is required to access the electronic mailbox of the user,
receiving an authentication token from the email server if an authentication token is required,
attempting access to the electronic mailbox of the user using the authentication token, and
storing the authentication token for subsequent use by the user to access the electronic mailbox of the user if access to the electronic mailbox using the authentication token has been successful; and
a mobile wireless communications device (25) for receiving user email from the mobile office platform.

2. A system according to Claim 1, which further comprises a database (60) operative with the mobile office platform for storing the authentication token for subsequent use when the user attempts access through the mobile office platform.

3. A system according to Claim 1, wherein said mobile office platform includes an email server, and further including a direct access proxy (40) for accessing and retrieving user emails from the electronic mailbox of the user.

4. A system according to Claim 3, wherein said mobile office platform includes a database (60) for storing the authentication token for subsequent use when the user attempts access to the electronic mailbox of the user through the mobile office platform.

5. A system according to Claim 1, wherein said mobile office platform is operative for initially accessing the electronic mailbox with a user identification and email address.

6. A system according to Claim 5, wherein said mobile office platform is operative for discarding the user identification and email address if the authentication token can access the electronic mailbox of the user.

7. A system according to Claim 5, wherein said mobile office platform is operative for retaining the user identification and email address if an authentication token is not required for accessing the electronic mailbox of the user.

8. A method of authenticating a user for accessing an electronic mailbox (51, 53) of the user from a remote device and obtaining electronic mail (email), which comprises:
initially accessing from a mobile office platform (24) an email server (50, 52) provided by an email service provider and containing the electronic mailbox of the user by using a user identification and password to authenticate the user;
determining at the mobile office platform if an authentication token is required to access the electronic mailbox of the user;
receiving at the mobile office platform an authentication token from the email server if an authentication token is required;
attempting access at the mobile office platform to the electronic mailbox of the user using the authentication token;
storing at the mobile office platform the authentication token for subsequent use by the user if access to the electronic mailbox using the token has been successful; and
receiving user email on a mobile wireless communications device (25).

9. A method according to Claim 8, which further comprises accessing the electronic mailbox from a direct access proxy (40) that retrieves and delivers any user email to the remote device of the user.

10. A method according to Claim 8, which further comprises initially accessing the email server with a user identification and user email address.

11. A method according to Claim 10, which further comprises discarding the user identification and email address if the authentication token can access the electronic mailbox of the user.

12. A method according to Claim 10, which further comprises retaining the user identification and email address if an authentication token is not required for accessing the electronic mailbox of the user.

13. A method according to Claim 8, which further comprises storing the authentication token on a database (60) for subsequent use when the user attempts access through the third-party email server.

14. A computer-readable medium having computer-executable instructions for executing functions for controlling an intermediate device for accessing email on behalf of a user and using data received from the user comprising:
initially accessing an electronic mail server (50, 52) that includes the electronic mailbox (51, 53) of a user when a user identification and password is entered to authenticate the user;
determining if an authentication token is required to access the electronic mailbox of the user;
receiving an authentication token from the email server if an authentication token is required;
attempting access to the electronic mailbox of the user using the authentication token; and
storing the authentication token for subsequent user by the user to access their electronic mailbox if access to the electronic mailbox using the authentication token has been successful.

15. A computer-readable medium according to Claim 14, wherein the computer-executable instructions are operative for storing the authentication token on a database (60) for subsequent use when the user attempts access.

16. A computer-readable medium according to Claim 14, wherein the computer-executable instructions are operative for delivering email messages to a mobile wireless communications device (25).

17. A computer-readable medium according to Claim 14, wherein the computer-executable instructions are operative for accessing the email server with a user identification and email address.

18. A computer-readable medium according to Claim 17, wherein the computer-executable instructions are operative for discarding the user identification and email address if the authentication token can access the electronic mailbox.

19. A computer-readable medium according to Claim 17, wherein the computer-executable instructions are operative for retaining the user identification and email address if an authentication token is not required for accessing the electronic mailbox of the use.

## Patentansprüche

1. System (20) zum Authentifizieren eines Benutzers für den Zugriff auf eine elektronische Mailbox (51, 53) des Benutzers von einer Fernvorrichtung und für den Erhalt von elektronischer Post (Email), welches umfasst:
einen Emailserver (50, 52), der von einem Emailserviceprovider zur Verfügung gestellt wird; und
einer Mobiles-Büro-Plattform (24), die dazu funktionsfähig ist,
anfangs auf den Emailserver mittels einer Benutzerauthentifizierung und eines Benutzerpassworts zur Authentifizierung des Benutzers zuzugreifen,
auf den von dem Emailserviceprovider zur Verfügung gestellten Emailserver zuzugreifen,
zu bestimmen, ob ein Authentifizierungstoken erforderlich ist, um auf die elektronische Mailbox des Benutzers zuzugreifen,
einen Authentifizierungstoken von dem Emailserver zu erhalten, wenn ein Authentifizierungstoken erforderlich ist,
zu versuchen, auf die elektronische Mailbox des Benutzers mittels des Authentifizierungstokens zuzugreifen, und
den Authentifizierungstoken für eine anschließende Verwendung durch den Benutzer zu speichern, um auf die elektronische Mailbox des Benutzers zuzugreifen, wenn der Zugriff auf die elektronische Mailbox mittels des Authentifizierungstokens erfolgreich war; und
eine mobile drahtlose Kommunikationsvorrichtung (25) zum Empfangen einer Benutzer-Email von der Mobiles-Büro-Plattform.

2. System nach Anspruch 1, das weiterhin eine Datenbank (60) umfasst, die mit der Mobiles-Büro-Plattform zum Speichern des Authentifizierungstokens für eine anschließende Verwendung funktionsfähig ist, wenn der Benutzer einen Zugriff durch die Mobiles-Büro-Plattform versucht.

3. System nach Anspruch 1, wobei die Mobiles-Büro-Plattform einen Emailserver einschließt und ferner einen Direktzugriffs-Proxy (40) zum Zugreifen auf und Abrufen von Benutzer-Emails von der elektronischen Mailbox des Benutzers beinhaltet.

4. System nach Anspruch 3, wobei die Mobiles-Büro-Plattform eine Datenbank (60) zum Speichern des Authentifizierungstokens für eine anschließende Verwendung einschließt, wenn der Benutzer einen Zugriff auf die elektronische Mailbox des Benutzers durch die Mobiles-Büro-Plattform versucht.

5. System nach Anspruch 1, wobei die Mobiles-Büro-Plattform dazu funktionsfähig ist, anfangs auf die elektronische Mailbox mit einer Benutzeridentifikation und -Emailadresse zuzugreifen.

6. System nach Anspruch 5, wobei die Mobiles-Büro-Plattform dazu funktionsfähig ist, die Benutzeridentifikation und -Emailadresse zu verwerfen, wenn der Authentifizierungstoken auf die elektronische Mailbox des Benutzers zugreifen kann.

7. System nach Anspruch 5, wobei die Mobiles-Büro-Plattform dazu funktionsfähig ist, die Benutzeridentifikation und -Emailadresse zurückzuhalten, wenn kein Authentifizierungstoken zum Zugreifen auf die elektronische Mailbox des Benutzers erforderlich ist.

8. Verfahren zur Authentifizierung eines Benutzers für den Zugriff auf eine elektronische Mailbox (51, 53) des Benutzers von einer Fernvorrichtung und für den Erhalt von elektronischer Post (Email), welches umfasst:
anfangs Zugreifen von einer Mobiles-Büro-Plattform (24) auf einen Emailserver (50, 52), der von einem Emailserviceprovider zur Verfügung gestellt wird und die elektronische Mailbox des Benutzers enthält, mittels einer Benutzerauthentifizierung und eines Benutzerpassworts zur Authentifizierung des Benutzers;
Bestimmen an der Mobiles-Büro-Plattform, ob ein Authentifizierungstoken erforderlich ist, um auf die elektronische Mailbox des Benutzers zuzugreifen;
Erhalten eines Authentifizierungstokens von dem Emailserver an der Mobiles-Büro-Plattform, wenn ein Authentifizierungstoken erforderlich ist,
Versuchen, an der Mobiles-Büro-Plattform auf die elektronische Mailbox des Benutzers mittels des Authentifizierungstokens zuzugreifen,
Speichern des Authentifizierungstokens an der Mobiles-Büro-Plattform für eine anschließende Verwendung durch den Benutzer, wenn der Zugriff auf die elektronische Mailbox mittels des Tokens erfolgreich war; und
Empfangen einer Benutzer-Email auf einer mobilen drahtlosen Kommunikationsvorrichtung (25).

9. Verfahren nach Anspruch 8, das ferner das Zugreifen auf die elektronische Mailbox von einem Direktzugriffs-Proxy (40) umfasst, derjegliche Benutzer-Email abruft und an die Fernvorrichtung des Benutzers liefert.

10. Verfahren nach Anspruch 8, das ferner das anfängliche Zugreifen auf den Emailserver mit einer Benutzeridentifikation und Benutzer-Emailadresse umfasst.

11. Verfahren nach Anspruch 10, das ferner das Verwerfen der Benutzeridentifikation und -Emailadresse umfasst, wenn der Authentifizierungstoken auf die elektronische Mailbox des Benutzers zugreifen kann.

12. Verfahren nach Anspruch 10, das ferner das Zurückhalten der Benutzeridentifikation und -Emailadresse umfasst, wenn kein Authentifizierungstoken zum Zugreifen auf die elektronische Mailbox des Benutzers erforderlich ist.

13. Verfahren nach Anspruch 8, das ferner das Speichern des Authentifizierungstokens in einer Datenbank (60) für eine anschließende Verwendung umfasst, wenn der Benutzer einen Zugriff durch den Fremd-Emailserver versucht.

14. Computerlesbares Medium mit computerausführbaren Anweisungen zum Ausführen von Funktionen zum Steuern einer Zwischenvorrichtung für den Zugriff auf eine Email im Namen eines Benutzers und die Verwendung von Daten, die vom Benutzer erhalten werden, mit:
anfangs Zugreifen auf einen Emailserver (50, 52), der die elektronische Mailbox (51, 53) eines Benutzers enthält, wenn eine Benutzerauthentifizierung und ein Benutzerpassworts zur Authentifizierung des Benutzers eingegeben werden;
Bestimmen, ob ein Authentifizierungstoken erforderlich ist, um auf die elektronische Mailbox des Benutzers zuzugreifen;
Erhalten eines Authentifizierungstokens von dem Emailserver, wenn ein Authentifizierungstoken erforderlich ist,
Versuchen, Zugriff auf die elektronische Mailbox des Benutzers mittels des Authentifizierungstokens zu nehmen,
Speichern des Authentifizierungstokens für eine anschließende Verwendung durch den Benutzer, um auf seine elektronische Mailbox zuzugreifen, wenn der Zugriff auf die elektronische Mailbox mittels des Authentifizierungstokens erfolgreich war.

15. Computerlesbares Medium nach Anspruch 14, wobei die computerausführbaren Anweisungen dazu funktionsfähig sind, den Authentifizierungstoken in einer Datenbank (60) für eine anschließende Verwendung zu speichern, wenn der Benutzer einen Zugriff versucht.

16. Computerlesbares Medium nach Anspruch 14, wobei die computerausführbaren Anweisungen dazu funktionsfähig sind, Emailnachrichten an eine mobile drahtlose Kommunikationsvorrichtung (25) zu liefern.

17. Computerlesbares Medium nach Anspruch 14, wobei die computerausführbaren Anweisungen dazu funktionsfähig sind, auf den Emailserver mit einer Benutzeridentifikation und -Emailadresse zuzugreifen.

18. Computerlesbares Medium nach Anspruch 17, wobei die computerausführbaren Anweisungen dazu funktionsfähig sind, die Benutzeridentifikation und -Emailadresse zu verwerfen, wenn der Authentifizierungstoken auf die elektronische Mailbox zugreifen kann.

19. Computerlesbares Medium nach Anspruch 17, wobei die computerausführbaren Anweisungen dazu funktionsfähig sind, die Benutzeridentifikation und -Emailadresse zurückzuhalten, wenn kein Authentifizierungstoken zum Zugreifen auf die elektronische Mailbox des Benutzers erforderlich ist.

## Revendications

1. Système (20) servant à authentifier un utilisateur pour accès à une boîte aux lettres électronique (51, 53) de l'utilisateur depuis un dispositif distant et à obtenir le courrier électronique (courriel), le système comprenant :
un serveur de courriel (50, 52) fourni par un fournisseur de service de courriel ; et
une plateforme de bureau mobile (24) servant à :
accéder initialement au serveur de courriel en utilisant une identification et un mot de passe d'utilisateur afin d'authentifier l'utilisateur,
accéder au serveur de courriel fourni par le fournisseur de service de courriel,
déterminer si un jeton d'identification est requis pour accéder à la boîte aux lettres électronique de l'utilisateur,
recevoir un jeton d'identification du serveur de courriel si un jeton d'identification est requis,
tenter d'accéder à la boîte aux lettres électronique de l'utilisateur en utilisant le jeton d'identification, et
stocker le jeton d'identification pour utilisation ultérieure par l'utilisateur pour accéder à la boîte aux lettres électronique de l'utilisateur si l'accès à la boîte aux lettres électronique en utilisant le jeton d'identification a réussi ; et
un dispositif de communications sans fil mobile (25) destiné à recevoir le courriel de l'utilisateur depuis la plateforme de bureau mobile.

2. Système selon la revendication 1, qui comprend, en outre, une base de données (60) fonctionnant avec la plateforme de bureau mobile pour stocker le jeton d'identification pour utilisation ultérieure lorsque l'utilisateur tente un accès par le biais de la plateforme de bureau mobile.

3. Système selon la revendication 1, dans lequel ladite plateforme de bureau mobile comprend un serveur de courriel, et comprenant, en outre, un serveur mandataire à accès direct pour accéder aux courriels de l'utilisateur et les rapatrier depuis la boîte aux lettres électronique de l'utilisateur.

4. Système selon la revendication 3, dans lequel ladite plateforme de bureau mobile comprend une base de données (60) servant à stocker le jeton d'identification pour utilisation ultérieure lorsque l'utilisateur tente d'accéder à la boîte aux lettres électronique de l'utilisateur par le biais de la plateforme de bureau mobile.

5. Système selon la revendication 1, dans lequel ladite plateforme de bureau mobile sert à accéder initialement à la boîte aux lettres électronique de l'utilisateur au moyen d'une identification et d'une adresse de courriel d'utilisateur.

6. Système selon la revendication 5, dans lequel ladite plateforme de bureau mobile sert à mettre au rebut l'identification et l'adresse de courriel d'utilisateur si le jeton d'identification peut accéder à la boîte aux lettres électronique de l'utilisateur.

7. Système selon la revendication 5, dans lequel ladite plateforme de bureau mobile sert à conserver l'identification et l'adresse de courriel d'utilisateur si un jeton d'identification n'est pas requis pour accéder à la boîte aux lettres électronique de l'utilisateur.

8. Procédé d'identification d'un utilisateur pour accéder à une boîte aux lettres électronique (51, 53) de l'utilisateur depuis un dispositif distant et obtenir le courrier électronique (courriel), le procédé comprenant les étapes consistant à :
accéder initialement, depuis une plateforme de bureau mobile (24), à un serveur de courriel (50, 52) fourni par un fournisseur de service de courriel et contenant la boîte aux lettres électronique de l'utilisateur en utilisant une identification et un mot de passe d'utilisateur afin d'authentifier l'utilisateur ;
déterminer, au niveau de la plateforme de bureau mobile, si un jeton d'identification est requis pour accéder à la boîte aux lettres électronique de l'utilisateur ;
recevoir, au niveau de la plateforme de bureau mobile, un jeton d'identification du serveur de courriel si un jeton d'identification est requis ;
tenter d'accéder, au niveau de la plateforme de bureau mobile, à la boîte aux lettres électronique de l'utilisateur en utilisant le jeton d'identification ; et
stocker, au niveau de la plateforme de bureau mobile, le jeton d'identification pour utilisation ultérieure par l'utilisateur si un accès à la boîte aux lettres électronique en utilisant le jeton d'identification a réussi ; et
recevoir le courriel de l'utilisateur sur un dispositif de communications sans fil mobile (25).

9. Procédé selon la revendication 8, qui comprend, en outre, l'accès à la boîte aux lettres électronique depuis un serveur mandataire à accès direct (40) qui rapatrie et remet tout courriel d'utilisateur au dispositif distant de l'utilisateur.

10. Procédé selon la revendication 8, qui comprend, en outre, l'accès initial au serveur de courriel en utilisant une identification d'utilisateur et une adresse de courriel d'utilisateur.

11. Procédé selon la revendication 10, qui comprend, en outre, la mise au rebut de l'identification et de l'adresse de courriel d'utilisateur si le jeton d'identification peut accéder à la boîte aux lettres électronique de l'utilisateur.

12. Procédé selon la revendication 10, qui comprend, en outre, la conservation de l'identification et de l'adresse de courriel d'utilisateur si un jeton d'identification n'est pas requis pour accéder à la boîte aux lettres électronique de l'utilisateur.

13. Procédé selon la revendication 8, qui comprend, en outre, le stockage du jeton d'identification dans une base de données (60) pour utilisation ultérieure lorsque l'utilisateur tente un accès par le biais du serveur de courriel tiers.

14. Support pouvant être lu par ordinateur comportant des instructions exécutables par ordinateur pour exécuter des fonctions servant à commander un dispositif intermédiaire permettant d'accéder à un courriel pour le compte d'un utilisateur et d'utiliser des données reçues de l'utilisateur, le support comprenant les étapes consistant à :
accéder initialement à un serveur de courriel (50, 52) qui comprend la boîte aux lettres électronique (51, 53) d'un utilisateur lorsqu'une identification et un mot de passe d'utilisateur sont entrés pour authentifier l'utilisateur ;
déterminer si un jeton d'identification est requis pour accéder à la boîte aux lettres électronique de l'utilisateur ;
recevoir un jeton d'identification du serveur de courriel si un jeton d'identification est requis ;
tenter d'accéder à la boîte aux lettres électronique de l'utilisateur en utilisant le jeton d'identification ; et
stocker le jeton d'identification pour utilisation ultérieure par l'utilisateur pour accéder à sa boîte aux lettres électronique si l'accès à sa boîte aux lettres électronique en utilisant le jeton d'identification a réussi.

15. Support pouvant être lu par ordinateur selon la revendication 14, dans lequel les instructions exécutables par ordinateur servent à stocker le jeton d'identification dans une base de données (60) pour utilisation ultérieure lorsque l'utilisateur tente un accès.

16. Support pouvant être lu par ordinateur selon la revendication 14, dans lequel les instructions exécutables par ordinateur servent à remettre les messages de courriels à un dispositif de communications sans fil mobile (25).

17. Support pouvant être lu par ordinateur selon la revendication 14, dans lequel les instructions exécutables par ordinateur servent à accéder au serveur de courriel en utilisant une identification et une adresse de courriel d'utilisateur.

18. Support pouvant être lu par ordinateur selon la revendication 17, dans lequel les instructions exécutables par ordinateur servent à mettre au rebut l'identification et l'adresse de courriel d'utilisateur si le jeton d'identification peut accéder à la boîte aux lettres électronique.

19. Support pouvant être lu par ordinateur selon la revendication 17, dans lequel les instructions exécutables par ordinateur servent à conserver l'identification et l'adresse de courriel d'utilisateur si un jeton d'identification n'est pas requis pour accéder à la boîte aux lettres électronique de l'utilisateur.
